# EUROPÄISCHE PATENTSCHRIFT

(11) **EP 2 601 005 B1**
(45) Veröffentlichungstag und Bekanntmachung des Hinweises auf die Patenterteilung: **10.09.2014**
(21) Anmeldenummer: 11740842.7
(22) Anmeldetag: 27.07.2011
(51) Int. Cl.: B23K 26/03, B23K 26/00, C03B 23/08, C03B 29/00

(54) **VERFAHREN ZUM FORMGEBENDEN UMSCHMELZEN VON WERKSTÜCKEN MIT EINEM ENERGETISCHEN STRAHL**
METHOD OF SHAPING REMELTING OF WORKPIECES WITH A HIGH-ENERGY BEAM
PROCÉDÉ DE FAÇONNAGE DE PIÈCES PAR REFUSION À L'AIDE D'UN FAISCEAU D'ÉNERGIE

(30) Priorität: 02.08.2010 DE 102010033053
(43) Veröffentlichungstag der Anmeldung: 12.06.2013
(73) Patentinhaber: Fraunhofer-Gesellschaft zur Förderung der angewandten Forschung e.V., 80686 München (DE)
(72) Erfinder: WILLENBORG, Edgar, 52146 Würselen (DE); TEMMLER, Andre, 52062 Aachen (DE); RICHMANN, Annika, 52064 Aachen (DE)
(86) Internationale Anmeldenummer: PCT/EP2011/003769
(87) Internationale Veröffentlichungsnummer: WO 2012/016661

(56) Entgegenhaltungen:
- DE-A1- 10 342 750
- US-A- 6 043 452
- US-A1- 2004 154 646
- US-A1- 2005 252 895
- F. VEGA ET AL: "LASER APPLICATION FOR OPTICAL GLASS POLISHING", OPTICAL ENGINEERING, SOC. OF PHOTO-OPTICAL INSTRUMENTATION ENGINEERS, BELLINGHAM, Bd. 37, Nr. 1, 1. Januar 1998 (1998-01-01) , Seiten 272-279, XP000736294, ISSN: 0091-3286, DOI: 10.1117/1.601614

## Beschreibung

Die Erfindung betrifft ein Verfahren zum formgebenden Umschmelzen eines Werkstücks nach dem Oberbegriff des Anspruchs 1 (siehe, z.B., DE 103 42 750 A1). Bevorzugtes Anwendungsgebiet ist das formgebende Umschmelzen von Werkstücken aus Glas oder thermoplastischem Kunststoff, insbesondere die Formkorrektur von Linsen, das Einbringen von Mikrostrukturen in Oberflächen, insbesondere Glasoberflächen, und die Formung asphärischer Optiken.

### Stand der Technik

Für das Mikrostrukturieren und Formen von Mikrooptiken werden bisher häufig Prägeverfahren eingesetzt. Dabei wird ein formgebendes Werkzeug benötigt, welches die Struktur oder Form der Optik bestimmt. Aufgrund der aufwendigen Herstellung der Formwerkzeuge, der damit verbundenen hohen Kosten und der Festlegung auf eine bestimmte Form oder Struktur ist das Verfahren jedoch allenfalls bei hohen Stückzahlen ökönomisch. Problematisch ist in technischer Hinsicht darüber hinaus der direkte Kontakt des Formwerkzeugs mit dem Glassubstrat, welcher beispielsweise zu einem Verkleben führen kann.

Darüber hinaus sind weitere mechanische Verfahren zum Strukturieren und Formen von Glas bekannt, z.B. Schleifen, Fräsen, Bohren, Ultraschallbearbeitung, Bearbeitung mit Partikel- oder Wasserstrahlen. Insbesondere das Schleifen stellt derzeit die Hauptfertigungstechnologie für hochpräzise, refraktive, optische Komponenten dar. Da dem Schleifen ein statistischer Abtrageprozess zugrunde liegt, ist es auf einfache Geometrien, wie sphärische oder planare Flächen beschränkt. Asphärische Oberflächengeometrien oder Freiformflächen lassen sich nicht bzw. nur mit erheblichem Aufwand durch Schleifen erzeugen.

Insbesondere für das Glätten asphärischer Oberflächen und für die Formkorrektur von Optiken ist darüber hinaus das magnetorheologische Polieren (oder Finishing) bekannt. Dabei wird ein magnetorheologisches Fluid, welches an einem mit einem Elektromagneten versehenen Polierrad haften bleibt und sich verfestigt, als Polierwerkzeug eingesetzt. Das Verfahren ermöglicht einen lokalen und definierten Materialabtrag, erfordert allerdings vergleichsweise lange Bearbeitungszeiten. Aufgrund der Größe der Polierräder weist das Verfahren darüber hinaus Beschränkungen hinsichtlich der Formgebung und der erreichbaren Strukturgröße.

Aus der EP 0 535 620 B1 ist ein Verfahren zum Laserpolieren von Werkstücken aus Glas bekannt, bei dem eine sehr dünne Oberflächenschicht eines Werkstücks durch Laserbestrahlung aufgeschmolzen wird. Das resultierende Zerfließen des aufgeschmolzenen Materials führt dabei zu einer Glättung der Werkstückoberfläche.

In der DE 10342750 A1 wird ein Verfahren zum Glätten und Polieren oder Strukturieren eines Werkstücks beschrieben, bei dem das Werkstück entlang von Bearbeitungsbahnen mittels Laserstrahlung umgeschmolzen wird. Dabei werden die Leistungsdichte der Laserstrahlung und/oder ihre Wechselwirkungszeit mit der Oberfläche entlang der Bearbeitungsbahn moduliert.

In der EP0690028 B1 wird ein Verfahren zur Herstellung von Mikrolinsen (mit einem maximalen Durchmesser von 1 mm) beschrieben, bei dem planare Oberflächen aus Nicht-Alkali oder Borsilikatglas umgeschmolzen werden. Das Werkstück wird hierbei intermittierend horizontal bewegt und auf der Oberfläche werden in Matrixform Mikrolinsen erstellt, indem jeweils durch senkrechte Einstrahlung der Laserstrahlung eine lokale Aufheizung erfolgt, wodurch jeweils eine konvexe Oberflächenform erzeugt wird.

Der Erfindung liegt die Aufgabe zugrunde, ein verbessertes Verfahren zum formgebenden Umschmelzen eines Werkstücks anzugeben, welches insbesondere für Werkstücke aus Glas oder Kunststoff geeignet ist, und mit dem auch vergleichsweise komplexe Formveränderungen schnell, flexibel und präzise erzeugt werden können.

### Darstellung der Erfindung

Die Lösung dieses technischen Problems erfolgt durch das Verfahren gemäß dem unabhängigen Anspruch 1. Vorteilhafte Ausgestaltungen und Weiterbildungen werden durch die abhängigen Ansprüche angegeben oder lassen sich aus der nachfolgenden Beschreibung und den Ausführungsbeispielen entnehmen.

Erfindungsgemäß wird bei dem vorliegenden Verfahren zum formgebenden Umschmelzen eines Werkstücks ein energetischer Strahl auf die Oberfläche des Werkstücks gerichtet und dadurch das Werkstück innerhalb eines Bearbeitungsbereichs umgeschmolzen.

Dabei wird durch Vergleich der vorliegenden IST-Form des Werkstücks mit einer zu erreichenden SOLL-Form zunächst ein Materialfluss ermittelt, durch den das Werkstück innerhalb des Bearbeitungbereichs zumindest näherungsweise, vorzugsweise exakt, von der IST-Form in die SOLL-Form überführbar ist. Zum - mindestens näherungsweisen - Erwirken des so ermittelten Materialflusses wird eine auf der Oberfläche des Werkstücks innerhalb des Bearbeitungbereichs einzustellende örtliche Temperaturverteilung berechnet, welche innerhalb des Bearbeitungbereichs mehrere Extremwerte, vorzugsweise mehrere Maximal- und/oder mehrere Minimalwerte, aufweist. Die Beaufschlagung des Werkstücks innerhalb des Bearbeitungbereichs mit der energetischen Strahlung wird dann so gewählt, dass sich diese berechnete Temperaturverteilung - zumindest näherungsweise - einstellt.

Die Ermittlung des Materialflusses und Berechnung der einzustellenden Temperaturverteilung erfolgt mittels einer Datenverarbeitungsanlage. Die derart berechnete und eingestellte Temperaturverteilung bewirkt den gewünschten Materialfluss, d.h. die gewünschte Umverteilung des Werkstückmaterials, und damit die Umformung des Werkstücks innerhalb des Bearbeitungsbereichs von der IST-Form in die SOLL- Form.

Das vorliegende formgebende Verfahren ist ein Verfahren zum Umschmelzen, d.h. die Formgebung gründet sich nicht auf einen Abtrageprozess sondern auf eine Umverteilung des Materials durch Materialfluss. Vorzugsweise ist das Verfahren so gestaltet, insbesondere sind die Strahlparameter des energetischen Strahls so gewählt, dass kein Abtrag bzw. nahezu kein Abtrag von Material erfolgt. Ein kaum meßbarer Abtrag ist, wie dem Fachmann klar ist, prinzipiell nicht zu vermeiden, ist jedoch im erfindungsgemäßen Verfahren so gering gehalten, dass der Fachmann dieses als abtragloses Verfahren bezeichnen würde. Das Verfahren bewirkt damit einen geringeren Materialverbrauch sowie einen geringeren - beispielsweise aufgrund möglicher Beschädigungen beim Abtragen hervorgerufenen - Ausschuss und je nach zu bearbeitenen Material eine geringere Umweltbelastung.

Als "formgebende" Verfahren werden vorliegend alle Prozesse verstanden, bei denen ein Werkstück in irgendeiner Weise geformt wird, insbesondere sowohl solche, bei denen das Werkstück auf makroskopischer Ebene eine völlig neue Form erhält, als auch solche, bei denen die Form des Werkstücks lediglich lokal korrigiert wird oder lediglich die Oberflächenstruktur geändert wird, also z.B. eine Strukturierung der Oberfläche erzeugt oder eine unerwünschte Strukturierung der Oberfläche beseitigt wird.

Das Verfahren eignet sich für die Bearbeitung von Werkstücken aus verschiedenen Materialien, wie etwa Metall und Keramik. Vorzugsweise wird das Verfahren jedoch für die Formgebung von Werkstücken aus Glas oder thermoplastischem Kunststoff eingesetzt.

Als energetische Strahlung wird vorzugsweise Laserstrahlung eingesetzt, insbesondere kontinuierliche Laserstrahlung oder gepulste Laserstrahlung mit einer Pulsdauer von mindestens 1 µs; insbesondere kann z.B. ein CO₂-Laser eingesetzt werden.

Mit dem erfindungsgemäßen Verfahren kann eine vorgebbare Temperaturverteilung innerhalb eines Bearbeitungsbereichs auf der zu bearbeitenden Oberfläche zumindest näherungsweise erzeugt werden. Durch die eingestellte Temperaturverteilung entstehen auf der Oberfläche lokal verschiedene Oberflächenspannungen und Viskositäten. Auch der Dampfdruck des aufgeschmolzenen Materials auf der Oberfläche verändert sich abhängig von der Temperatur und thermische Spannungen entstehen in der dünnen aufgeschmolzenen Schicht der Oberfläche.

Durch die vorgebbare Temperaturverteilung wird innerhalb des Bearbeitungsabschnitts somit eine Oberflächenspannungsverteilung eingestellt. Dadurch bilden sich innerhalb dieses Bearbeitungsabschnitts Oberflächenspannungsgradienten.

Darüber hinaus wird durch die vorgebbare Temperaturverteilung innerhalb des Bearbeitungsabschnitts auch eine Viskositätsverteilung eingestellt. Es bilden sich innerhalb dieses Bearbeitungsabschnitts somit Viskositätsgradienten.

Außerdem wird durch die vorgebbare Temperaturverteilung innerhalb des Bearbeitungsabschnitts eine Verteilung des lokalen Dampfdrucks eingestellt. Dadurch bilden sich innerhalb dieses Bearbeitungsabschnitts Dampfdrucksgradienten.

Die mittels der vorgebbaren Temperaturverteilung gebildeten Oberflächenspannungs-, Dampfdrucks- und/oder Viskositätsgradienten führen zu dem gewünschten Materialfluss. Durch den Materialfluss wird das Material innerhalb der dünnen aufgeschmolzenen Schicht umverteilt. Der Materialfluss innerhalb des Bearbeitungsbereichs kann somit durch die eingestellte Temperaturverteilung gezielt gesteuert werden. Am Ende der durch den Materialfluss bewirkten Umverteilung des Materials hat das Werkstück innerhalb des Bearbeitungsbereichs nach seiner Abkühlung die Struktur oder Form, die erzielt werden sollte.

Indem für einen über eine zweidimensionale Werkstückoberfläche ausgedehnten Bearbeitungsbereich eine Temperaturverteilung mit mehreren Extremwerten zunächst berechnet und dann gezielt eingestellt wird, kann an jeder Stelle innerhalb des Bearbeitungsbereichs die gewünschte Größe, Richtung und Orientierung des Materialflusses vorgegeben werden. Dadurch können auch komplexe Strukturen, welche Formveränderungen mit erheblicher Komplexität erfodern, erzeugt werden.

Der Bearbeitungsbereich weist vorzugsweise in zwei, also beiden orthogonalen Richtungen jeweils, eine Ausdehnung von mindestens 500 µm auf. Typischerweise beträgt diese Ausdehnung jeweils mindestens 2 mm, gemäß einer bespnders vorgezogenen Ausführungsform beträgt diese Ausdehnung mindestens 5 mm, insbesondere in beiden orthogonalen Richtungen jeweils mindestens 5 mm. Das erfindungsgemäße Verfahren ermöglicht damit eine schnelle Bearbeitung selbst für Formveränderungen hoher Komplexität.

Im einfachsten Fall ist die Größe der Bearbeitungsbereiche, d.h. ihre Ausdehnung in beiden orthogonalen Richtungen auf der Werkstückoberfläche, für das gesamte Werkstück oder zumindest einen Teilbereich des Werkstücks konstant gewählt.

Vorzugsweise wird die Größe der Bearbeitungsbereiche für ein Werkstück oder einen Teil eines Werkstücks dabei abhängig von einer zu erzeugende Ortswellenlänge der Struktur gewählt, welche ein Maß für die mittlere laterale Strukturgröße einer zu erzeugenden oder einer zu beseitigenden Struktur auf der Oberfläche des Werkstücks bzw. des Teilbereichs des Werkstücks ist. Es wird vorzugsweise eine Größe der Bearbeitungsbereiche für ein Werkstück oder einen Teilbereich eines Werkstücks eingestellt, welche größer ist als die der zu erzeugenden Ortswellenlänge der Struktur.

Besonders vorteilhaft ist es, wenn die umzuschmelzende Werkstückoberfläche bereits poliert vorliegt oder vor dem Umschmelzvorgang zunächst poliert wird. In diesem Fall kann der dem Umschmelzen vorangehende SOLL-IST-Vergleich besonders schnell, einfach und genau erfolgen, insbesondere mit optischer Messtechnik.

Die gewünschte inhomogene, mehrere Extremwerte aufweisende Temperaturverteilung innerhalb des jeweiligen Bearbeitungsbereichs kann auf verschiedene Weise erzeugt werden, etwa durch schnelle Oszillation mit einen Laserscanner, durch adaptive Optiken, andere Strahlformungsoptiken oder Blenden.

Gemäß einer ersten vorteilhaften Ausführungsform der Erfindung erfolgt das Umschmelzen innerhalb eines Bearbeitungsbereichs stationär, d.h. ohne Relativbewegung zwischen dem energetischen Strahl und dem Werkstück während der Strahlungsbeaufschlagung des Bearbeitungsbereichs. Ein Bearbeitungsbereich wird also vollständig instantan bearbeitet. Die Strahlungsbeaufschlagung des Werkstücks erfolgt somit vorzugsweise insgesamt nicht kontinuierlich und entlang Bearbeitungsbahnen, sondern Bereich für Bereich; d.h. die einzelnen Bearbeitungsbereiche werden sequentiell bearbeitet. Nach der Bearbeitung eines Bearbeitungsbereichs wird die Strahlachse des energetischen Strahls und/oder das Werkstück relativ zueinander verfahren und anschließend ein weiterer Bearbeitungsbereich bestrahlt. Vorzugsweise besteht kein oder nahezu kein Überlapp zwischen den Bearbeitungsbereichen.

Dabei wird abhängig von der zu erzeugenden Temperaturverteilung auf der Werkstückoberfläche die Leistungsdichteverteilung des energetischen Strahls über seinen Strahlquerschnitt eingestellt. Dies geschieht durch ein geeignetes oder mehrere geeignete optische Mittel, z.B. durch adaptive Optiken oder andere Strahlformungsopiken oder durch Blenden. Auf diese Weise wird die Leistungsdichteverteilung des energetischen Strahls über seinen Strahlquerschnitt an eine zu erzeugende oder an eine zu beseitigende Struktur auf der Oberfläche des Werkstücks angepasst, d.h. abhängig von einer zu erzeugenden oder einer zu beseitigenden Struktur auf der Oberfläche des Werkstücks bzw. wird die Leistungsdichteverteilung des energetischen Strahls über seinen Strahlquerschnitt eingestellt. Hierfür weist der Strahlquerschnitt des energetischen Strahls mindestens in einer Querschnittsrichtung, vorzugsweise jedoch in zwei, also beiden orthogonalen Richtungen jeweils, eine Ausdehnung von mindestens 500 µm auf. Vorzugsweise beträgt diese Ausdehnung jedoch mindestens 5 mm, insbesondere in beiden orthogonalen Richtungen jeweils mindestens 5 mm. Auf diese Weise können Bearbeitungsbereiche in entsprechender Größe realisiert werden.

Vorzugsweise ist die Ausdehnung des Strahlungsquerschnitts variabel einstellbar und kann somit an die Größe der zu erzeugenden bzw. zu beseitigenden Strukturen angepasst werden. Dies kann schnell und automatisiert erfolgen, insbesondere ist anders als im Stand der Technik, wie z.B. beim konventionellen Schleifen, kein Wechsel des Werkzeugs erforderlich.

Das erfindungsgemäße Verfahren zeichnet sich dadurch aus, dass die Umverteilung auf der Werkstückoberfläche für einen ausgedehnten Bearbeitungsbereich in einem einzigen Schritt erfolgt. Dadurch können auch komplexe und unregelmäßige Strukturen oder Formen schnell erzeugt werden, so z.B. asphärische und Freiformflächen, die mit herkömmlichen Verfahren nur mit erheblichen Aufwand herstellbar sind.

Gemäß einer weiteren vorteilhaften Ausführungsform der Erfindung erfolgt die Bearbeitung mit einer linienförmigen energetischen Strahlung, die in der Ausdehnung variiert werden kann. Bei der Bearbeitung wird dabei die linienförmige energetische Strahlung mit einer bestimmten (nicht notwendigerweise konstanten) Scangeschwindigkeit über den jeweiligen Bearbeitungsbereich des umzuschmelzenden Werkstücks geführt. Bei Werkstücken aus Glas oder thermoplastischem Kunststoff betragen die Linienbreiten dabei typischerwiese einige mm, die Linienlängen einige 10 mm. Zur Erwirkung der berechneten, auf der Oberfläche des Werkstücks innerhalb des jeweiligen Bearbeitungsbereichs einzustellenden Temperaturverteilung kann insbesondere die Scangeschwindigkeit und/oder die Linienbreite variiert werden.

Der Laserstrahlquerschnitt kann, muss aber nicht den jeweiligen Bearbeitungsbereich bereits abdecken. Möglich ist auch das Verschieben der Laserstrahlachse innerhalb des Bearbeitungsbereichs mit einem Laserscanner, mit dem der Laserstrahl sehr präzise auf dem Bauteil geführt werden kann, vorzugsweise mit hohen Scangeschwindigkeiten von mindestens 1 m/s. Durch schnelle Oszillationsbewegungen können zeitlich abhängige Intensitätsspitzen in der Intensitätsverteilung hervorgerufen werden, die zur Strukturierung genutzt werden können. Die Intensitätsspitzen induzieren einen Materialfluss und führen so zur Umverteilung des Materials und die Struktur in der Oberfläche entsteht. Die Temperaturspitzen können z.B. durch langsame, die Temperaturtäler durch schnelle Scangeschwindigkeiten erzeugt werden .

Es ist vorteilhaft, dass Werkstück vor dem Umschmelzen vorzuheizen. Ein Bearbeitungsbereich des Werkstücks wird vorzugsweise vor der Beaufschlagung mit der das Umschmelzen bewirkenden Laserstrahlung auf eine Vorheiztemperatur von mindestens 250°C gebracht, insbesondere auf eine Vorheiztemeratur, welche 50°C bis 150°C, vorzugsweise ca. 100°C, unterhalb der Glasübergangstemperatur des Werkstoffes des umzuschmelzenden Werkstückes liegt.

Beim erfindungsgemäßen Verfahren erfolgt das Umschmelzen des Werkstücks vorzugsweise mindestens bis zu einer Umschmelztiefe von 10 µm. Bei einer geringeren Umschmelztiefe können Strukturen geringerer Tiefe eingebracht werden. Bei größeren Umschmelztiefen von mindestens 100 µm werden noch bessere Ergebnisse erreicht. Die Strukturtiefe und die laterale Strukturgröße können beide flexibel durch die Eigenschaften der energetischen Strahlung variiert werden.

Durch das Verfahren können verschiedenste Strukturen am Werkstück aufgebracht werden oder auch Korrekturformungen im Submikrometerbereich vorgenommen werden. Der Vorteil des Verfahrens besteht u.a. darin, dass keine weiteren Hilfsmittel benötigt werden und keine Abfälle entstehen. Das Verfahren zeichnet sich insbesondere auch durch seine Flexibilität aus, da es keine Formwerkzeuge gebraucht. Dadurch tritt auch kein Verschleiß eines Werkzeugs auf.

Das Verfahren ist insbesondere geeignet und wird vorzugsweise dazu eingesetzt, unerwünschte Strukturen, insbesondere auch noch Strukturen mit Strukturtiefen von 1 µm und darunter, auf der Oberfläche des Werkstücks zu beseitigen, d.h. das Werkstück zu glätten.

Andererseits ist das Verfahren auch dazu geeignet und wird vorzugsweise dazu eingesetzt, um Strukturen mit Strukturtiefen von 10 µm und darüber zu erzeugen.

Das Verfahren hat beispielsweise besondere Vorzüge bei der Herstellung von Linsen. Dabei kann in einer einzigen Anlage sowohl eine Politur erfolgen, bei der die Rauheit der Oberfläche verringert wird, als auch eine Formkorrektur der Linse vorgenommen werden. Das erfindungsgemäße Verfahren bewirkt damit einen erheblichen Zeitgewinn gegenüber konventionellen Verfahren. Die energetische Strahlung wird zunächst eingesetzt um auf einer Glasoberfläche eine Linse zu formen. Die Oberfläche ist nach diesem Bearbeitungsschritt bereits poliert und kann vermessen werden. Bei eventuellen bestehenden Formabweichungen von der gewünschten Form, wird nun dieselbe energetische Strahlung eingesetzt um eine Formkorrektur vorzunehmen. Alternativ zur Formgebung durch Schmelzen kann das Laserpolieren und Laserformkorrigieren auch auf geschliffene und durch das Laserabtragen erzeugte Linsenrohlinge angewendet werden.

Das Verfahren eignet sich im Besonderen auch für Herstellung asphärischer Optiken, Brillengläsern, Linsen oder anderer optischer Elemente mit komplexer Geometrie. Hierbei können aus einfachen, kostengünstigen sphärischen Bauteilen (z.B. spärische Linsengeometrien) mit dem erfindungsgemäßen Verfahren komplexe optische Elemente wie Asphären hergestellt werden, was insbesondere eine erhebliche Kostenersparnis gegenüber konventionellen Herstellungsmethoden bewirkt. Darüber hinaus sind keine auf eine spezielle Bauteilgeometrie angepassten Formwerkzeuge (wie etwa Blankpressen im konventionellen Verfahren) erforderlich, wodurch das erfindungsgemäße Verfahren besonders flexibel einsetzbar und insbesondere auch für kleine Serien geeignet ist.

Das Verfahren kann darüber hinaus vorteilhaft bei der Strukturierung von Glasoberflächen angewendet werden, beispielsweise bei der Herstellung von Mikrostrukturen in Glas für Photovoltaikanwendungen. Durch die Mikrostrukturen wird die Abbildung der für diese Optiken geeigneten Strahlung dabei gezielt verändert und für die jeweilige Anwendung optimiert. Mit dem erfindungsgemäßen Verfahren können die Mikrostrukturen besonders schnell und mit hoher Genauigkeit hergestellt werden

### Kurze Beschreibung der Zeichnungen

Die vorliegende Erfindung wird nachfolgend anhand von Ausführungsbeispielen in Verbindung mit den Zeichnungen ohne Beschränkung des durch die Patentansprüche vorgegebenen Schutzbereichs nochmals näher erläutert. Hierbei zeigen:

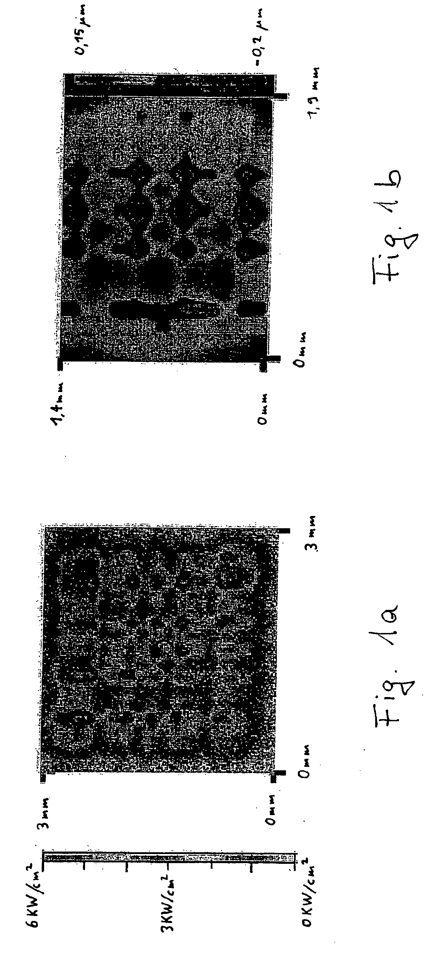

- Fig. 1a:: Eine Leistungsdichteverteilung einer auf einen 3 mm x 3 mm großen Bearbeitungsbereich eingestrahlte Laserstrahlung
- Fig. 1b:: Resultierendes Höhenprofil eines 1.4 mm x 1.9 mm großen Ausschnitts des Bearbeitungsbereichs von Fig. 1 a nach Bearbeitung

### Wege zur Ausführung der Erfindung

Fig. 1 a zeigt eine Leistungsdichteverteilung (gemessen mit einem Primes Strahldiagnosegerät) einer auf einen 3 mm x 3 mm großen Bearbeitungsbereich eingestrahlte Laserstrahlung in Falschfarbendarstellung. Die Leistungsdichteverteilung wurde mittels eines Gitters im Strahlengang des Laserstrahls erzeugt und entspricht insofern dem so entstandenen Fresnelbeugungsmuster. Die Intensität der innerhalb des Bearbeitungsbereichs auf die Oberfläche des Werkstücks auftreffenden Laserstrahlung liegt an den Minima der Verteilung bei nahezu 0 W/cm², an den Maxima bei ca. 6 KW/. cm² . Die Abstände benachbarter Maxima liegen in der Größenordnung von wenigen 100 µm.

Fig. 1b zeigt das resultierende Höhenprofil (gemessen mit einem Weißlichtinterferometer) eines 1.4 mm x 1.9 mm großen Ausschnitts des Bearbeitungsbereichs von Fig. 1 a in Falschfarbendarstellung nach Durchführung des erfindungsgemäßen Verfahrens. Auf der Werkstückoberfläche wurden Strukturen erzeugt mit einem Muster entsprechend der in Fig. 1 a gezeigten Leistungsdichteverteilung der Laserstrahlung. Die Höhendifferenz zwischen den erzeugten Maxima und Minima liegt im Submikrometerbereich, nämlich bei einigen 100 nm. Aus der Leistungsdichteverteilung in Fig. 1a resultieren Temperaturunterschiede, die zu lokalen Viskositätsunterschieden führen. Der Materialfluss erfolgt durch diese Viskositätsgradienten. Die Einstellung der Temperaturverteilung kann auch durch eine Scangeschwindigkeitsverteilung erfolgen. Bei der sequentiellen Bearbeitung entstehen die Viskositätsgradienten aufgrund desselben Prinzips.

## Patentansprüche

1. Verfahren zum formgebenden Umschmelzen eines Werkstücks, insbesondere eines Werkstücks aus Glas oder thermoplastischem Kunststoff, bei dem ein energetischer Strahl auf die Oberfläche des Werkstücks gerichtet und dadurch das Werkstück innerhalb eines Bearbeitungbereichs umgeschmolzen wird, **dadurch gekennzeichnet, dass**
· durch Vergleich der vorliegenden IST-Form des Werkstücks mit einer zu erreichenden SOLL-Form ein Materialfluss ermittelt wird, durch den das Werkstück innerhalb des Bearbeitungbereichs von der IST-Form zumindest näherungsweise in die SOLL-Form überführbar ist
· zum mindestens näherungsweisen Erwirken des ermittelten Materialflusses eine auf der Oberfläche des Werkstücks innerhalb des Bearbeitungbereichs einzustellende örtliche Temperaturverteilung berechnet wird, welche innerhalb des Bearbeitungbereichs mehrere Extremwerte aufweist,
· die Beaufschlagung des Werkstücks innerhalb des Bearbeitungbereichs mit der energetischen Strahlung so gewählt wird, dass sich die berechnete Temperaturverteilung zumindest näherungsweise einstellt.

2. Verfahren nach Anspruch 1, **dadurch gekennzeichnet, dass** der Strahlquerschnitt des energetischen Strahls auf der Oberfläche des Werkstücks den Bearbeitungsbereich vollständig umfasst.

3. Verfahren nach einem der vorhergehenden Ansprüche, **dadurch gekennzeichnet, dass** der energetische Strahl eine Verteilung einer Leistungsdichte über seinem Strahlqüerschnitt aufweist, welche abhängig von der auf der Oberfläche des Werkstücks innerhalb des Bearbeitungsbereichs einzustellenden örtlichen Temperaturverteilung gewählt ist.

4. Verfahren nach einem der vorhergehenden Ansprüche, **dadurch gekennzeichnet, dass** der Strahlquerschnitt des energetischen Strahls mindestens in einer Richtung, vorzugsweise in zwei orthogonalen Richtungen jeweils, eine Ausdehnung von mindestens 500 µm, vorzugsweise von mindestens 5 mm aufweist.

5. Verfahren nach einem der vorhergehenden Ansprüche, **dadurch gekennzeichnet, dass** durch die erzeugte Temperaturverteilung sich innerhalb des Bearbeitungsbereichs Oberflächenspannungs-, Dampfdruck- und/oder Viskositätsgradienten bilden.

6. Verfahren nach einem der vorhergehenden Ansprüche, **dadurch gekennzeichnet, dass** die Verteilung einer Leistungsdichte des energetischer Strahls über seinen Strahlquerschnitt an eine zu erzeugende oder an eine zu beseitigende Struktur auf der Oberfläche des Werkstücks angepasst ist.

7. Verfahren nach einem der vorhergehenden Ansprüche, **dadurch gekennzeichnet, dass** das Umschmelzen des Werkstücks bis zu einer Umschmelztiefe von mindestens 10 µm, vorzugsweise 100 µm, erfolgt.

8. Verfahren nach einem der vorhergehenden Ansprüche, **dadurch gekennzeichnet, dass** Strukturen auf der Oberfläche des Werkstücks mit einer Strukturtiefe von mindestens 10 µm erzeugt werden und/oder dass Strukturen auf der Oberfläche des Werkstücks mit einer Strukturtiefe kleiner oder gleich 1 µm beseitigt werden.

9. Verfahren nach einem der vorhergehenden Ansprüche, **dadurch gekennzeichnet, dass** mehrere Bearbeitungsbereiche sequentiell strahlungsbeaufschlagt werden, wobei die Bearbeitungsbereiche keinen oder zumindest nahezu keinen Überlapp aufweisen.

10. Verfahren nach einem der vorhergehenden Ansprüche, **dadurch gekennzeichnet, dass** das Werkstück innerhalb des Bearbeitungsbereichs vordem Umschmelzen auf eine Vorheiztemperatur von mindestens 250°C vorgeheizt wird.

## Claims

1. Method for the shaping remelting of a workpiece, in particular a workpiece of glass or thermoplastic material, in which an energetic beam is directed onto the surface of the workpiece and the workpiece is thereby remelted within a working region, **characterized in that**
comparison of the present ACTUAL form of the workpiece with a DESIRED form to be achieved is used to determine a material flow by which the workpiece can be transformed within the working region from the ACTUAL form at least approximately into the DESIRED form,
to make the determined material flow take effect, at least approximately, a local temperature distribution to be set on the surface of the workpiece within the working region is calculated, comprising a number of extreme values within the working region,
the exposure of the workpiece to the energetic radiation within the working region is chosen such that the calculated temperature distribution is at least approximately obtained.

2. Method according to Claim 1, **characterized in that** the beam cross section of the energetic beam on the surface of the workpiece completely takes up the working region.

3. Method according to one of the preceding claims, **characterized in that** the energetic beam has a distribution of a power density over its beam cross section that is chosen depending on the local temperature distribution to be set on the surface of the workpiece within the working region.

4. Method according to one of the preceding claims, **characterized in that** the beam cross section of the energetic beam has at least in one direction, preferably in each of two orthogonal directions, an extent of at least 500 µm, preferably of at least 5 mm.

5. Method according to one of the preceding claims, **characterized in that** surface-tension, vapour-pressure and/or viscosity gradients form within the working region as a result of the temperature distribution produced.

6. Method according to one of the preceding claims, **characterized in that** the distribution of a power density of the energetic beam is adapted over its beam cross section to a structure to be generated or a structure to be eliminated on the surface of the workpiece.

7. Method according to one of the preceding claims, **characterized in that** the remelting of the workpiece takes place to a remelting depth of at least 10 µm, preferably 100 µm.

8. Method according to one of the preceding claims, **characterized in that** structures are generated on the surface of the workpiece with a structure depth of at least 10 µm and/or **in that** structures are eliminated on the surface of the workpiece with a structure depth of less than or equal to 1 µm.

9. Method according to one of the preceding claims, **characterized in that** multiple working regions are sequentially exposed to radiation, the working regions having no overlap or at least virtually no overlap.

10. Method according to one of the preceding claims, **characterized in that**, before the remelting, the workpiece is preheated within the working region to a preheating temperature of at least 250°C.

## Revendications

1. Procédé de façonnage d'une pièce par refusion, en particulier d'une pièce en verre ou en matière synthétique thermoplastique, dans lequel on dirige un faisceau d'énergie sur la surface de la pièce et on provoque ainsi la refusion de la pièce à l'intérieur d'une zone de traitement, **caractérisé en ce que**
- par comparaison de la forme réelle existante de la pièce avec une forme théorique à atteindre, on détermine un flux de matière, par lequel la pièce peut être convertie au moins approximativement de la forme réelle à la forme théorique à l'intérieur de la zone de traitement,
- on calcule une distribution locale de température à régler sur la surface de la pièce à l'intérieur de la zone de traitement pour réaliser au moins approximativement le flux de matière déterminé, laquelle présente plusieurs valeurs extrêmes à l'intérieur de la zone de traitement,
- on choisit de soumettre la pièce au faisceau d'énergie à l'intérieur de la zone de traitement, de telle manière que la distribution de température calculée s'établisse au moins approximativement.

2. Procédé selon la revendication 1, **caractérisé en ce que** la section transversale de faisceau du faisceau d'énergie sur la surface de la pièce comprend entièrement la zone de traitement.

3. Procédé selon l'une quelconque des revendications précédentes, **caractérisé en ce que** le faisceau d'énergie présente une distribution d'une densité de puissance sur sa section transversale de faisceau, qui est choisie en fonction de la distribution locale de température à régler sur la surface de la pièce à l'intérieur de la zone de traitement.

4. Procédé selon l'une quelconque des revendications précédentes, **caractérisé en ce que** la section transversale de faisceau du faisceau d'énergie présente au moins dans une direction, de préférence dans deux directions orthogonales, respectivement une extension d'au moins 500 µm, de préférence d'au moins 5 mm.

5. Procédé selon l'une quelconque des revendications précédentes, **caractérisé en ce qu'**il se forme à l'intérieur de la zone de traitement des gradients de tension superficielle, de tension de vapeur et/ou de viscosité en raison de la distribution de température produite.

6. Procédé selon l'une quelconque des revendications précédentes, **caractérisé en ce que** la distribution d'une densité de puissance du faisceau d'énergie sur sa section transversale de faisceau est adaptée à une structure à produire ou à une structure à éliminer sur la surface de la pièce.

7. Procédé selon l'une quelconque des revendications précédentes, **caractérisé en ce que** la refusion de la pièce est effectuée jusqu'à une profondeur de refusion d'au moins 10 µm, de préférence de 100 µm.

8. Procédé selon l'une quelconque des revendications précédentes, **caractérisé en ce que** l'on produit des structures sur la surface de la pièce avec une profondeur de structure d'au moins 10 µm et/ou on élimine des structures sur la surface de la pièce avec une profondeur de structure inférieure ou égale à 1 µm.

9. Procédé selon l'une quelconque des revendications précédentes, **caractérisé en ce que** l'on expose de façon séquentielle au faisceau plusieurs zones de traitement, les zones de traitement ne présentant pas ou au moins pratiquement pas de chevauchement.

10. Procédé selon l'une quelconque des revendications précédentes, **caractérisé en ce que** l'on préchauffe la pièce à l'intérieur de la zone de traitement, avant la refusion, à une température de préchauffage d'au moins 250°C.
